# EUROPÄISCHE PATENTANMELDUNG

(11) **EP 3 912 933 A1**
(43) Veröffentlichungstag der Anmeldung: **24.11.2021**
(21) Anmeldenummer: 21020269.3
(22) Anmeldetag: 21.05.2021
(51) Int. Cl.: B65G 39/02, B65G 13/00, B65G 13/11, B65G 39/12, B65G 39/18

(54) **ROLLENBAHN FÜR DEN TRANSPORT VON EINZELGÜTERN WIE Z.B. BELADENEN PALETTEN, ODER CONTAINERBOXXEN**

(30) Priorität: 22.05.2020 DE 202020002253 U
(71) Anmelder: AQS Logistic Systems GmbH, 57290 Neunkirchen (DE)
(72) Erfinder: KLEIN, Dieter, 5729 Neunkirchen (DE)
(74) Vertreter: Mey, Klaus-Peter

(57) **Zusammenfassung**

Rollenbahn für den Transport von Einzelgütern wie z.B. beladenen Paletten, oder Containerboxen, mit in Längsrichtung (B) der Rollenbahn angeordneten Laufbahnen (1), wobei die Laufbahnen (1) auf zueinander parallelen Drehachsen (2) gelagerte, zylindrische Walzen (3) umfassen und die Drehachsen (2) quer zur Rollenbahn angeordnet sind wobei die zylindrischen Walzen (3) einen Durchmesser nicht größer als 40 mm aufweisen, und sind mit einem Achsenabstand von nicht mehr als 200 mm entlang der jeweiligen Laufbahn (1) zueinander angeordnet somit wird erreicht, dass auch unter einer erhöhten Last eines Transportguts, eine Beeinträchtigung der Rolleigenschaften reduziert wird und insbesondere sollen auf der Rollenbahn auch Transportgüter mit nur kleinen Auflageflächen befördert werden.

## Beschreibung

Die Erfindung betrifft eine Rollenbahn für den Transport von Einzelgütern wie z. B. beladenen Paletten oder Containerboxen, mit in Längsrichtung der Rollenbahn angeordneten Laufbahnen, wobei die Laufbahnen auf zueinander parallelen Drehachsen gelagerte, zylindrische Walzen umfassen und die Drehachsen quer zur Rollenbahn angeordnet sind.

Rollenbahnen sind in großen Hochregallagern und insbesondere in Palettenlagern ein viel genutztes Mittel, um Transportgüter innerhalb dieser zu befördern. Eine derartige Rollenbahn ist beispielsweise aus der EP 1 061 017 B1 bekannt. Die darin vorgeschlagene Rollenbahn nutzt die Wirkung der Erdbeschleunigung auf das auf ihr befindliche Transportgut aus, indem sie sind zum Entnahmeende hin leicht abschüssig ausgebildet ist. Als Folge der leichten Abschüssigkeit bewegt sich das Die Erfindung betrifft eine Rollenbahn für den Transport von Einzelgütern wie z. B. beladenen Transportgut, z. B. genormte Euro-Paletten, unter ihrem Eigengewicht, auf den frei drehbar gelagerten Walzen aufliegend, ohne Extraenergieaufwand zum Entnahmeende hin.

Der Großteil der anzutreffenden Rollenbahnen besteht aus einer großen Anzahl von parallel angeordneten zylindrischen Walzen, die mit ihren beiden Enden in einer Basiskonstruktion drehbar gelagert sind. Dabei ist die Länge des zylindrischen Abschnitts der Walzen etwas größer gewählt als die in Transportrichtung betrachtete Breite des darauf entlang rollenden Transportguts. Beim Befördern von schweren Transportgütern und/oder Transportgütern mit kleinen Laufflächen zeigten sich verschlechterte Rolleigenschaften der Walzen. Die Ursache hierfür ist, dass genormte Transportpaletten sowie bestimmte Containerboxen nicht wirklich starr sind, sondern sich unter schwerer Last nach unten durchzubiegen und bei Transportgütern mit kleinen Laufflächen (z. B. nur Füße mit 60x60mm) der Rollabstand nicht klein genug realisiert werden kann. Als Folge dessen findet auch eine elastische Durchbiegung der Walzen statt, was wiederum zu Beeinträchtigungen der an beiden Enden der Walzen angeordneten Walzenlagerungen führt. Diese verkeilen sich entlang ihrer Drehachse. Zumindest erhöht sich ihr Rollwiderstand, welcher nicht durch die Kraft, erzeugt durch die Erdbeschleunigung in Kombination mit der Masse des Transportgutes und der gewählten Neigung der Rollenbahn, überwunden werden kann. Als unmittelbare Folge findet kein kontinuierliches Abrollen des Transportguts oder nur in verlangsamter Form statt.

Gelöst werden könnte das Problem, bei Beibehaltung des ursprünglichen Entwurfs, durch die Steigerung der Biegefestigkeit der Walzen. Dazu wäre der Einsatz von steiferen Materialien bzw. der Erhöhung der Wandstärke der Walzen notwendig. Dies würde jedoch für die Herstellung der Walzen zu einem erhöhten Materialaufwand führen, was in gesteigerten Herstellungskosten sowie Eigengewicht resultieren würde.

Die Aufgabe der vorliegenden Erfindung besteht darin, durch konstruktive Maßnahmen eine Rollenbahn weiterzuentwickeln, um unter einer erhöhten Last eines Transportguts eine Beeinträchtigung der Rolleigenschaften zu reduzieren. Insbesondere soll eine Rollenbahn geschaffen werden, auf der auch Transportgüter mit nur kleinen Auflageflächen befördert werden können.

Zur Lösung der Aufgabe wird bei einer Rollenbahn mit den eingangs genannten Merkmalen vorgeschlagen, dass die zylindrischen Walzen einen Durchmesser nicht größer als 40mm aufweisen, und mit einem Achsenabstand von nicht mehr als 200mm entlang der jeweiligen Laufbahn zueinander angeordnet sind.

Vorzugsweise weisen die zylindrischen Walzen einen Durchmesser nicht größer als 32 mm auf, und sind mit einem Achsenabstand von nicht mehr als 40 mm entlang der jeweiligen Laufbahn zueinander angeordnet.

Mit der erfindungsgemäßen Rollenbahn wird ein verbesserter Transport von schweren Transportgütern ermöglicht, wobei Beeinträchtigungen der Rolleigenschaften der belasteten zylindrischen Walzen entlang der Rollenbahn durch die erhöhte Walzenanzahl und der daraus erwachsenen gesteigerten Auflagefläche zwischen Transportgut und Rollenbahn verringert sind. Insbesondere wird durch die dichte Staffelung der Walzen auch ein Transport von Transportgütern mit kleineren Auflageflächen, wie beispielsweise Transportgütern mit Füßen oder Kufen ermöglicht, da die Länge der Auflagefläche in Laufrichtung immer noch größer als die Abstand zwischen den Walzen ist und die Auflagefläche somit mindestens auf einer Walze aufliegt.

Mithin lässt sich die Flächenlast über den Abstand der Walzen zueinander variieren. Zum Beispiel ist am Startpunkt des Transportweges des Transportgutes eine dichte Walzenstaffelung der Rollenbahn möglich, um hier durch möglichst geringen Rollwiderstand ein Beschleunigen des Transportgutes zu ermöglichen und um Kräfte beim Aufsetzen des Transportguts auf die Rollenbahn aufzufangen, wobei dann im Bereich der vom bereits beschleunigten Transportgut befahrenen Strecke eine geringere Staffelung mit weniger Walzen ausreichend wäre.

Vorzugsweise sind die zylindrischen Walzen als Hohlwalzen mit einer Wandstärke von mindestens 4,5 mm ausgebildet. Als Folge der gesteigerten belasteten Auflagefläche sowie aus der stärkeren Wandstärke der Rollen, werden verbesserte Rolleigenschaften des auf der Rollbahn befindlichen Transportguts ermöglicht. Ferner lassen sich die so verbesserten Rolleigenschaften des Transportguts dazu nutzen, die benötigte Neigung der Rollenbahn, zur Bewegung eines Transportgutes, zu verringern und somit insgesamt die überbrückbare Distanz bei gleichbleibender Höhendifferenz zwischen Start-und Zielpunkt der Rollenbahn zu erhöhen.

Bevorzugt umfasst die Rollenbahn insgesamt zwei Laufbahnen, die räumlich voneinander getrennt sind und zwischen sich einen walzenfreien Freiraum aufspannen. Insbesondere sind die Laufbahnen parallel zueinander angeordnet, wobei sie über eine Basiskonstruktion miteinander verbunden sind. Folglich sind die Walzen gegenüber denen im Stand der Technik verkürzt. Diese Ausführungsform hat den Vorteil, dass die Last des Transportguts ein verringertes Moment auf die Walze ausübt und somit, insbesondere auch durch die höhere Wandstärke der Walze, eine Verformung dieser, gegenüber einer Walze im Stand der Technik, verringert wird. Durch die Verwendung von zwei Laufbahnen innerhalb einer Rollenbahn, wobei diese räumlich voneinander getrennt sind, entsteht ein Freiraum zwischen den einzelnen Laufbahnen. Dieser kann beispielweise für die Installation von Brems- oder Antriebseinrichtungen für die Rollenbahn genutzt werden. Insbesondere kann auch von der Unterseite an das Transportgut gelangt werden.

Vorzugsweise ist jede Laufbahn in Längsrichtung als ein Profil ausgebildet, wobei das Profil dazu eingerichtet ist, die zylindrischen Walzen drehbar gelagert aufzunehmen. Ferner bevorzugt umfasst das Profil einen mittleren Abschnitt und Seitenabschnitte, die zu beiden Seiten am mittleren Abschnitt angeordnet sind, wobei die Seitenabschnitte relativ zu dem mittleren Abschnitt angewinkelt ausgebildet sind, wobei die zylindrische Walze drehbar auf einer Welle gelagert ist, und die Welle mit jeweils einem Ende in einer komplementären Bohrung, in einem der Seitenabschnitt, angeordnet ist.

Mit anderen Worten ist das Profil U-förmig sowie monolithisch ausgebildet. Aus der monolithischen Ausführungsform erwächst der Vorteil, dass nur umformende Arbeitsschritte notwendig und zeitaufwändige, stoffschlüssige Arbeitsschritte, wie das Verschweißen von Teilen, nicht notwendig sind.

Die Rollenbahn ist vorzugsweise modular ausgebildet, wobei Rollbahnmodule über stirnseitige, an beiden Enden ausgebildete Verbindungsschnittstellen miteinander zu der zusammenhängenden Rollenbahn, verbunden sind. Die Verwendung einer modularen Bauweise bringt den Vorteil mit sich, dass die Rollenbahn je nach Kundenwunsch angeordnet werden kann, ohne tiefgreifende Änderungen an der Gesamtkonstruktion vornehmen zu müssen. Insbesondere entsteht auch durch die modulare Bauweise eine Kostenreduzierung, wodurch die Module günstiger angeboten werden können, sowie eine erhöhte Ausstoßmenge realisierbar ist. Mithin können die Module auch als Kurvenmodul, Weichenmodul und diverse weitere Modultypen ausgebildet werden. Vorzugsweise ist ein Spurring auf mindestens jeder vierten zylindrischen Walze der Laufbahnen angeordnet, wobei der Spurring um den Radius der zylindrischen Walze herum auf der zylindrischen Walze angeordnet ist, und wobei der Spurring auf der dieser durch Sicherungsringe zumindest in axialer Richtung unbeweglich arretiert ist.

Mit anderen Worten ist die Rollenbahn dazu eingerichtet, Transportgüter mit verschiedener Auflagebreite zu transportieren. Soll ein Transportgut mit großer Breite auf der Rollenbahn befördert werden, wird dieses durch die äußeren Längsseiten, in Form von Auslegern der Rollenbahn auf den zylindrischen Rollen fortlaufend ausgerichtet. Wird ein Transportgut mit kleinerer Breite der Auflagefläche befördert, darf sich dieses nicht aufgrund eins großen Spiels drehen und im Zweifel verkeilen. Um dies zu verhindern, bilden die Spurringe einen Absatz auf den Walzen. Diese in Transportrichtung fluchtenden Absätze sind dazu eingerichtet, als Spur für ein entsprechendes Transportgut mit schmalerer Auflagebreite zu dienen. Mithin handelt es sich um eine Art Schiene, wobei sich das Transportgut im Zwischenraum zwischen den beiden Spurringen befindet und dort durch diese zentriert wird.

Die Spurringe werden koaxial auf der zylindrischen Walze angeordnet, wobei diese durch Sicherungsringe, als auch durch Schrauben, Verklemmen oder durch eine Verschraubung an der Walze befestigt werden. Insbesondere sind die Spurringe modular, also der Transportgutbreite entsprechend zu- und abrüstbar.

Bevorzugt kann die Rollenbahn auch ohne Spurringe betrieben werden, wobei durch die entsprechende Transportgütergeometrie ein Verkeilen des Transportgüters auch ohne Spurringe gewährleistet ist.

Vorzugsweise ist zumindest längs einer Teillänge der Rollenbahn beidseitig jeweils eine Führungsgeometrie ausgebildet, wobei die Führungsgeometrien dazu eingerichtet sind, die Containerboxen und/oder die Paletten in Längsrichtung auf den zylindrischen Walzen auszurichten. Bevorzugt umfasst die Führungsgeometrie Bleche, wobei die Bleche mit ihrer Unterseite zumindest teilweise trichterförmig zusammenlaufen, wobei das jeweilige untere Ende eines Bleches oberhalb des zylindrischen Bereichs der zylindrischen Walze endet. Mit anderen Worten sind die Führungsgeometrien dazu eingerichtet, das herangetragene Transportgut so auf den Laufbahnen der Rollenbahn auszurichten, dass ein problemloser Transport, bzw. ein problemloses Abrollen, ohne ein Verkanten ermöglicht wird. Insbesondere kann die Führungsgeometrie auch der Breite der Laufbahnen, bei Benutzung der Spurringe, angepasst werden. Ferner kann die Führungsgeometrie auch über die gesamte Länge der Rollenbahn ausgebildet sein und eine Alternative zu den Spurringen oder zu den Auslegern darzustellen.

Weitere Maßnahmen werden nachstehend gemeinsam mit der Beschreibung zwei bevorzugter Ausführungsbeispiele der Erfindung anhand der Figuren näher erläutert. Dabei zeigt:
- Fig. 1: eine schematische Draufsicht der Rollenbahn bestehend aus drei Rollenbahnmodulen,
- Fig. 2: eine schematische Schnittansicht des Querschnitts einer zylindrischen Rolle einer linken Laufbahn, gemäß einer ersten Ausführungsform,
- Fig. 3: eine schematische Schnittansicht des Querschnitts einer zylindrischen Rolle der linken Laufbahn mit installiertem Spurring, gemäß einer zweiten Ausführungsform, und
- Fig. 4: eine schematische Darstellung der Stirnseite der Rollenbahn mit Führungsgeometrien.

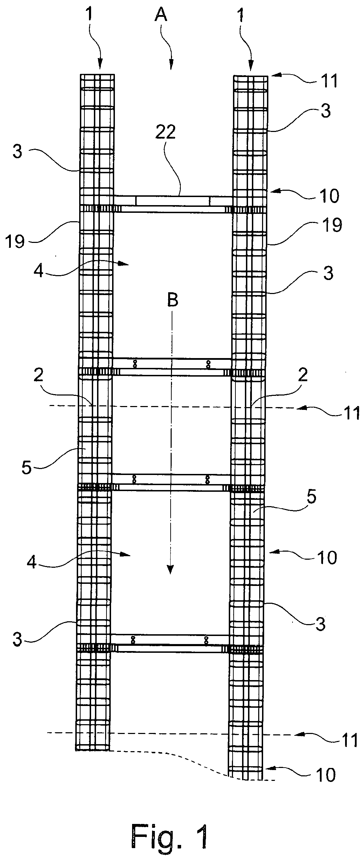

Die Figur 1 zeigt eine Draufsicht der erfindungsgemäße Rollenbahn mir einer leiterförmigen Basiskonstruktion 22 sowie zwei in Längsrichtung B der Rollenbahn angeordneten Laufbahnen 1, wobei die Laufbahnen 1 parallel zueinander und räumlich voneinander getrennt sind und zwischen sich einen walzenfreien Freiraum 4 aufspannen.

Insbesondere umfassen die Laufbahnen 1 auf zueinander parallelen Drehachsen 2 gelagerte, zylindrische Walzen 3, deren Drehachsen 2 quer zur Rollenbahn angeordnet sind. Die zylindrischen Walzen 3 weisen einen Durchmesser von nicht mehr als 40mm und einen Achsenabstand in Längsrichtung der Laufbahn 1 von nicht mehr als 200mm auf. Vorzugsweise weisen die zylindrischen Walzen 3 einen Durchmesser nicht größer als 32mm auf, und sie sind mit einem Achsenabstand von nicht mehr als 40mm entlang der jeweiligen Laufbahn 1 zueinander angeordnet.

Die Figur 1 zeigt zwei komplette und ein nur teilweises Rollenbahnmodul 10, wobei eine voll ausgebildete Rollenbahn einen deutlich größeren Umfang annehmen kann. Mit anderen Worten ist die Rollenbahn in Längsrichtung modular ausgebildet, wobei die Rollbahnmodule 10 über stirnseitige, an beiden Enden ausgebildete Verbindungsschnittstellen 11 miteinander zu einer längeren Rollenbahn verbunden sind.

Die dargestellten Rollenbahnmodule 10 können ein Bestandteil eines umfangreichen Paletten- oder Containerlagers sein, indem sich mehrfach nebeneinander und in mehreren Etagen übereinander Rollenbahnmodule 10 befinden und ein Lager für Transportgüter bilden. Insbesondere ist jede Rollenbahn zu einem Entladeende hin leicht abschüssig ausgebildet, wodurch die Transportgüter, auf den zylindrischen Walzen 3 aufliegend, unter Einwirkung der Erdbeschleunigung, ohne weitere Krafteinwirkung, von einem Beladebereich zu dem Entladeende hin rollen.

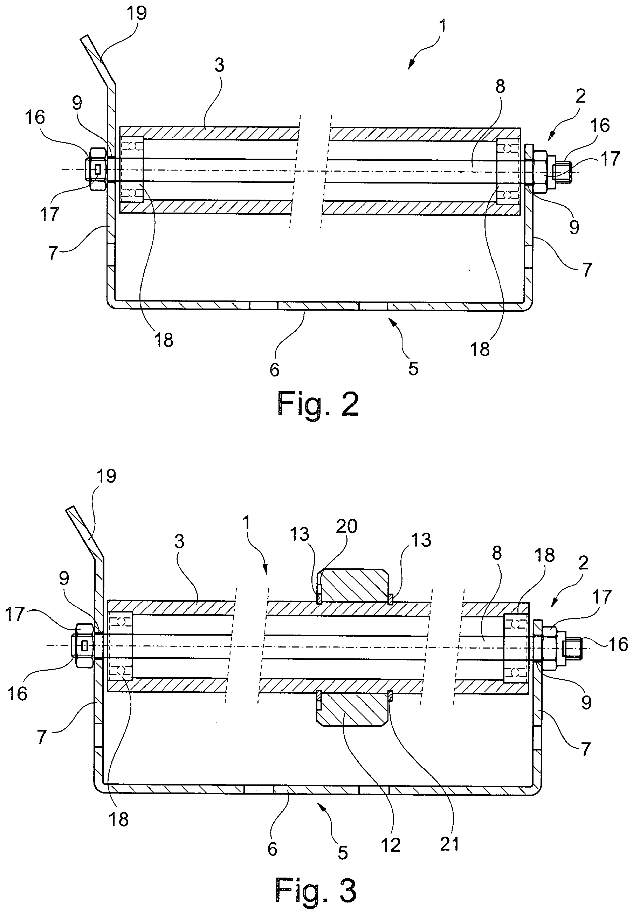

Die Figuren 2 und 3 sind Schnittansichten des Querschnitts einer zylindrischen Rolle 3 der Laufbahn 1, wobei die Laufbahn 1 ein Profil 5 aufweist, wobei das Profil 5 dazu eingerichtet ist, die zylindrischen Walzen 3 drehbar gelagert aufzunehmen. Das Profil 5 umfasst einen mittleren Abschnitt 6 und Seitenabschnitte 7, die entgegengesetzt am mittleren Abschnitt 6 angeordnet sind, wobei die Seitenabschnitte 7 relativ zu dem mittleren Abschnitt 6 angewinkelt, vorzugsweise rechtwinklig, ausgebildet sind.

Die zylindrische Walze 3 ist drehbar auf einer Welle 8 gelagert, wobei die Welle 8 mit jeweils einem Ende in einer komplementären Bohrung 9 in dem jeweiligen Seitenabschnitt 7 angeordnet ist. Insbesondere ist die Welle 8 mit Gewindeabschnitten 16 an ihren Enden ausgebildet, wobei die Welle 8 über die Gewindeabschnitte 16 mit Muttern 17 drehfest mit dem Profil 5 verschraubt ist.

Ferner sind der mittlere Abschnitt 6 sowie die Seitenabschnitte 7 monolithisch ausgebildet, also einteilig miteinander verbunden. Insbesondere ist die hohle Walze 3 an ihren Enden über zwei innenliegende Lager 18 drehbar auf der Welle 8 gelagert. Die Lager 18 sind hier Wälzlager.

Ferner umfasst das Profil 5 an seinem äußeren Ende einen Ausleger 19. Beide Laufbahnen 1 umfassen jeweils einen Ausleger 19, wobei diese an der Außenseite der Laufbahnen ausgebildet sind und sich über die gesamte Länge des Rollenbahnmoduls 10 erstrecken. Die Ausleger 19 sind schräg zur Rollenbahnebene dazu eingerichtet, als Führung für die auf den Rollenbahn befindlichen Transportgüter zu dienen und diese auf der Laufbahnen 1, bzw. auf den zylindrischen Walzen 3 zu halten.

In der Figur 3 ist eine Schnittansicht mit einer zur Aufnahme eines Spurrings 12 befähigten zylindrischen Walze 3 dargestellt, wobei auf jeder oder jeder zweiten oder jeder dritten oder jeder vierten zylindrischen Walze 3 der Laufbahnen 1 ein Spurring 12 angeordnet ist. Der Spurring 12 ist umlaufend auf der zylindrischen Walze angeordnet und auf dieser durch Sicherungsringe 13 zumindest in axialer Richtung unbeweglich angeordnet. Vorzugsweise ist der Umfang des Spurrings 12 koaxial zu der zylindrischen Walze 3.

Die beiden Sicherungsringe 13 arretieren in jeweils einer Fase 20 auf der Innenseite des Spurrings 12 und in jeweils einer Nut 21 in der Walze 3.

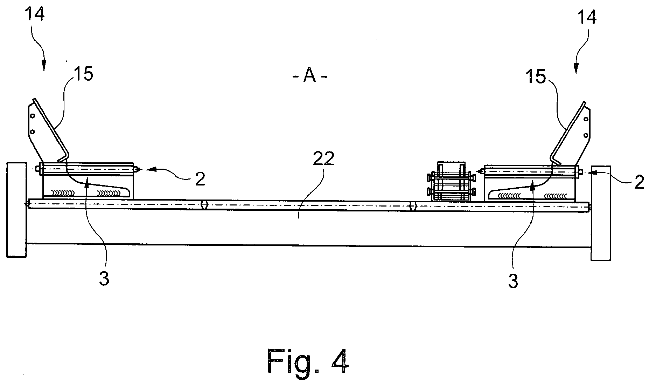

Figur 4 zeigt die Stirnseite der Rollenbahn mit Führungsgeometrien 14, wobei zumindest längs einer Teillänge der Laufbahnen 1 beidseitig jeweils eine Führungsgeometrie 14 ausgebildet ist. Die Führungsgeometrien 14 sind gemeinsam dazu eingerichtet, die Containerboxen und/oder die Paletten auf den zylindrischen Walzen 3 in Längsrichtung B auszurichten.

Insbesondere umfasst die Führungsgeometrie 14 Bleche 15 an beiden Längsrändern der Rollenbahn, die gemeinsam einen nach unten zulaufenden Trichter bilden, wobei sich das jeweilige untere Ende jedes Bleches 15 oberhalb des zylindrischen Bereichs der zylindrischen Walze 3 befindet. Mit anderen Worten dienen die Bleche 15 als Führung, sodass ein nicht optimal abgesenktes Transportgut an den geneigten Innenflächen der Bleche 15 entlang gleitet und durch diese dennoch in die richtige Position auf der Rollenbahn gebracht wird.

### Bezugszeichen

- 1: Laufbahn
- 2: Drehachse
- 3: Walze
- 4: Freiraum
- 5: Profil
- 6: Mittlerer Abschnitt
- 7: Seitenabschnitt
- 8: Welle
- 9: Bohrung
- 10: Rollbahnmodul
- 11: Verbindungsschnittstelle
- 12: Spurring
- 13: Sicherungsring
- 14: Führungsgeometrie
- 15: Blech
- 16: Gewindeabschnitt
- 17: Mutter
- 18: Lager
- 19: Ausleger
- 20: Fase
- 21: Nut
- 22: Basiskonstruktion
- B: Längsrichtung

## Patentansprüche

1. Rollenbahn für den Transport von Einzelgütern wie z.B. beladenen Paletten, oder Containerboxen, mit in Längsrichtung (B) der Rollenbahn angeordneten Laufbahnen (1), wobei die Laufbahnen (1) auf zueinander parallelen Drehachsen (2) gelagerte, zylindrische Walzen (3) umfassen und die Drehachsen (2) quer zur Rollenbahn angeordnet sind, **dadurch gekennzeichnet, dass** die zylindrischen Walzen (3) einen Durchmesser nicht größer als 40 mm aufweisen, und mit einem Achsenabstand von nicht mehr als 200 mm entlang der jeweiligen Laufbahn (1) zueinander angeordnet sind.

2. Rollenbahn nach Anspruch 1, **dadurch gekennzeichnet, dass** die zylindrischen Walzen (3) einen Durchmesser nicht größer als 32 mm aufweisen, und mit einem Achsenabstand von nicht mehr als 40 mm entlang der jeweiligen Laufbahn (1) zueinander angeordnet sind.

3. Rollenbahn nach Anspruch 2, **gekennzeichnet durch** insgesamt zwei Laufbahnen (1) die räumlich voneinander getrennt sind und zwischen sich einen walzenfreien Freiraum (4) aufspannen.

4. Rollenbahn nach Anspruch 2 oder 3, **dadurch gekennzeichnet, dass** jede Laufbahn (1) in Längsrichtung (B) als ein Profil (5) ausgebildet ist, wobei das Profil (5) dazu eingerichtet ist, die zylindrischen Walzen (3) drehbar gelagert aufzunehmen.

5. Rollenbahn nach Anspruch 4, **dadurch gekennzeichnet, dass** das Profil (5) einen mittleren Abschnitt (6) und Seitenabschnitte (7), die zu beiden Seiten am mittleren Abschnitt (6) angeordnet sind, umfasst, wobei die Seitenabschnitte (7) relativ zu dem mittleren Abschnitt (6) angewinkelt ausgebildet sind, wobei die zylindrische Walze (3) drehbar auf einer Welle (8) gelagert ist, und die Welle (8) mit jeweils einem Ende in einer komplementären Bohrung (9), in einem der Seitenabschnitt (7), angeordnet ist.

6. Rollenbahn nach einem der vorhergehenden Ansprüche, **dadurch gekennzeichnet, dass** die zylindrischen Walzen (3) als Hohlwalzen mit einer Wandstärke von mindestens 4,5mm ausgebildet sind.

7. Rollenbahn nach einem der vorhergehenden Ansprüche, **dadurch gekennzeichnet, dass** diese modular ausgebildet ist, wobei Rollbahnmodule (10) über stirnseitige, an beiden Enden ausgebildete Verbindungsschnittstellen (11) miteinander zu der zusammenhängenden Rollenbahn, verbunden sind.

8. Rollenbahn nach einem der vorhergehenden Ansprüche, **dadurch gekennzeichnet, dass** ein Spurring (12) auf mindestens jeder vierten zylindrischen Walze (3) der Laufbahnen (1) angeordnet ist, wobei der Spurring (12) umlaufend auf der zylindrischen Walze (3) angeordnet ist, und wobei der Spurring (12) auf dieser durch Sicherungsringe (13) zumindest in axialer Richtung unbeweglich angeordnet ist.

9. Rollenbahn nach einem der vorhergehenden Ansprüche, **dadurch gekennzeichnet, dass** zumindest längs einer Teillänge der Rollenbahn beidseitig Führungsgeometrien (14) ausgebildet sind, wobei die Führungsgeometrien (14) dazu eingerichtet sind, die Containerboxen und/oder die Paletten in Längsrichtung (B) auf den zylindrischen Walzen (3) auszurichten.

10. Rollenbahn nach Anspruch 9, **dadurch gekennzeichnet, dass** die Führungsgeometrie (14) Bleche (15) umfasst, wobei die Bleche (15) mit ihrer Unterseite zumindest teilweise trichterförmig zusammen laufen, wobei das jeweilige untere Ende eines Bleches (15) oberhalb des zylindrischen Bereichs der zylindrischen Walze (3) endet.
